# EUROPÄISCHE PATENTANMELDUNG

(11) **EP 4 843 369 A1**
(43) Veröffentlichungstag der Anmeldung: **25.11.2026**
(21) Anmeldenummer: 25177259.6
(22) Anmeldetag: 19.05.2025
(51) Int. Cl.: A01B 63/112, G01L 5/13

(54) **VERFAHREN ZUR ERMITTLUNG DES WARTUNGSZUSTANDS EINER ZUGKRAFTMESS-EINRICHTUNG FÜR EINEN LANDWIRTSCHAFTLICHEN TRAKTOR**

(71) Anmelder: Deere & Company, Moline, IL 61265 (US)
(72) Erfinder: SCHREIECK, LUCAS, 68163 Mannheim (DE)
(74) Vertreter: Dehnhardt, Florian Christopher

(57) **Zusammenfassung**

Die Erfindung betrifft ein Verfahren zur Ermittlung des Wartungszustands einer Zugkraftmesseinrichtung (12) für einen landwirtschaftlichen Traktor (10), bei dem die Zugkraftmesseinrichtung (12) einen Biegestab (34) sowie eine Sensoranordnung (36) zur Erfassung einer an dem Biegestab (34) auftretenden Auslenkung umfasst, wobei die Auslenkung aufgrund einer an gegenüberliegenden Biegestabenden (38a, 38b) ausgeübten Zug- oder Schubkraft linker und rechter Unterlenker (40a, 40b) eines Dreipunkt-Krafthebers (26) hervorgerufen wird. Hierbei wird von einer Kontrolleinheit (14) bei Erkennung eines zug- oder schubkraftfreien Betriebszustands des Dreipunkt-Krafthebers (26) die mittels der Sensoranordnung (36) erfasste Auslenkung des Biegestabs (34) mit einem vorgegebenen Grenzwert verglichen, um bei betraglichem Überschreiten des vorgegebenen Grenzwerts auf einen Wartungsbedarf des Biegestabs (34) zu schließen.

## Beschreibung

Die Erfindung betrifft ein Verfahren zur Ermittlung des Wartungszustands einer Zugkraftmesseinrichtung für einen landwirtschaftlichen Traktor, bei dem die Zugkraftmesseinrichtung einen Biegestab sowie eine Sensoranordnung zur Erfassung einer an dem Biegestab auftretenden Auslenkung umfasst, wobei die Auslenkung aufgrund einer an gegenüberliegenden Biegestabenden ausgeübten Zug- oder Schubkraft linker und rechter Unterlenker eines Dreipunkt-Krafthebers hervorgerufen wird.

Die solchermaßen erfasste Auslenkung erlaubt es, ausgehend von den als bekannt vorausgesetzten mechanischen Eigenschaften des Biegestabs, die an den Unterlenkern des Dreipunkt-Krafthebers beim Betrieb eines bodeneingreifenden Anbaugeräts auftretenden Zug- bzw. Schubkräfte verlässlich zu ermitteln. Diese Informationen werden beispielsweise im Rahmen einer Zugkraftregelung beim Pflügen oder dergleichen verwendet.

Unter normalen Umständen federt der Biegestab in kräftefreiem Zustand von selbst in eine neutrale Ruhelage zurück. Dieser neutralen Ruhelage wird durch entsprechende Kalibrierung der Zugkraftmesseinrichtung eine Zug- bzw. Schubkraft mit dem Wert Null zugewiesen. Dies ist erforderlich, da der Biegestab toleranzbedingt meist auch in seiner neutralen Ruhestellung eine zu einer messbaren Auslenkung führende geringfügige Biegung aufweist.

Das Auftreten einer übermäßigen Biegebeanspruchung kann dazu führen, dass der Biegestab nicht mehr vollständig in seine neutrale Ruhelage zurückzufedern vermag. Dies kann vom Bediener unerkannt bleiben und zu fehlerhaften Messergebnissen hinsichtlich des Umfangs der tatsächlich wirkenden Zug- bzw. Schubkräfte führen. Ursachen für eine derartige überlastbedingte (bleibende) Deformation des Biegestabs können schlagartig auftretende Krafteinwirkungen bei Kontakt bodeneigreifender Anbaugeräte mit im Erdreich liegenden Felsbrocken oder dergleichen sein.

Angesichts dessen ist es Aufgabe der vorliegenden Erfindung, ein Verfahren der eingangs genannten Art anzugeben, das dem Auftreten einer übermäßigen Biegebeanspruchung des Biegestabs entsprechend Rechnung trägt.

Diese Aufgabe wird durch ein Verfahren zur Ermittlung des Wartungszustands einer Zugkraftmesseinrichtung für einen landwirtschaftlichen Traktor mit den Merkmalen des Patentanspruchs 1 gelöst.

Bei einem Verfahren zur Ermittlung des Wartungszustands einer Zugkraftmesseinrichtung für einen landwirtschaftlichen Traktor umfasst die Zugkraftmesseinrichtung einen Biegestab sowie eine Sensoranordnung zur Erfassung einer an dem Biegestab auftretenden Auslenkung, wobei die Auslenkung aufgrund einer an gegenüberliegenden Biegestabenden ausgeübten Zug- oder Schubkraft linker und rechter Unterlenker eines Dreipunkt-Krafthebers hervorgerufen wird. Hierbei wird von einer Kontrolleinheit bei Erkennung eines zug- oder schubkraftfreien Betriebszustands des Dreipunkt-Krafthebers die mittels der Sensoranordnung erfasste Auslenkung des Biegestabs mit einem vorgegebenen Grenzwert verglichen, um bei betraglichem Überschreiten des vorgegebenen Grenzwerts auf einen Wartungsbedarf des Biegestabs zu schließen.

Diese Vorgehensweise erlaubt es, eine regelmäßige Überprüfung des Wartungsbedarfs des Biegestabs während des laufenden Betriebs des landwirtschaftlichen Traktors vorzunehmen, ohne dass hierzu eine Werkstatt aufgesucht werden müsste. Eine mögliche Beeinträchtigung der Funktion der Zugkraftmesseinrichtung lässt sich so zeitnah erkennen und beheben, so zum Beispiel durch Nachkalibrieren der Zugkraftmesseinrichtung oder Austausch des Biegestabs. Der Grenzwert wird derart gesetzt, dass dieser charakteristisch ist für eine überlastbedingte (bleibende) Deformation des jeweils verwendeten Biegestabs, abhängig von dessen als bekannt vorausgesetzten mechanischen Eigenschaften.

Hierbei weist der im Heck- oder Frontbereich des landwirtschaftlichen Traktors befindliche Dreipunkt-Kraftheber üblicherweise linke und rechte Unterlenker auf, die an einem Chassisteil des landwirtschaftlichen Traktors derart angelenkt sind, dass sich ein an zugehörigen Kupplungsschnittstellen der Unterlenker angebrachtes Anbaugerät mittels eines hydraulischen Hubwerks gezielt anheben und absenken lässt. Neben den beiden Unterlenkern ist weiterhin ein zentraler Oberlenker vorgesehen, der der Führung des Anbaugeräts beim Heben und Senken dient und daran über eine weitere Kupplungsschnittstelle eingehängt ist. Hierbei weist das hydraulische Hubwerk linke und rechte Hydraulikzylinder auf, mittels derer sich über eine starre Welle drehfest miteinander verbundene linke und rechte Hubarme verschwenken lassen, an deren freien Enden wiederum die beiden Unterlenker über jeweilige Hubstreben angelenkt sind.

Die Betätigung der Hydraulikzylinder erfolgt auf Veranlassung einer als elektrisch steuerbare Ventilanordnung ausgebildeten Betätigungseinrichtung. Diese weist ein aus einer Hochdruckpumpe eines Hydrauliksystems mit Hydraulikflüssigkeit gespeistes erstes Sitzventil zur Druckbeaufschlagung zugehöriger Kolbenkammern der Hydraulikzylinder sowie ein zur Druckentlastung der Kolbenkammern vorgesehenes zweites Sitzventil auf, wobei das zweite Sitzventil in ein Hydraulikreservoir des Hydrauliksystems mündet. Mit anderen Worten dient das erste Sitzventil dem Anheben, das zweite Sitzventil dem Absenken der Unterlenker des Dreipunkt-Krafthebers.

Vorteilhafte Weiterbildungen des erfindungsgemäßen Verfahrens gehen aus den Unteransprüchen hervor.

Zur fortlaufenden Diagnose des Biegestabs während des Betriebs des landwirtschaftlichen Traktors kann vorgesehen sein, dass von der Kontrolleinheit auf einen zug- oder schubkraftfreien Betriebszustand des Dreipunkt-Krafthebers geschlossen wird, wenn sich die Unterlenker bei stillstehendem landwirtschaftlichem Traktor (i) in einer abgesenkten Arbeitsposition und/oder (ii) in einer zum Anbringen bzw. Abnehmen eines Anbaugeräts abgesenkten Kuppelposition befinden. In beiden Fällen ist mit hinreichender Wahrscheinlichkeit davon auszugehen, dass die Unterlenker im Wesentlichen frei von Zug- oder Schubkräften sind, da ein gegebenenfalls vorhandenes bodeneigreifendes Anbaugerät dann auf dem Untergrund ruhend aufliegt. Ob der landwirtschaftliche Traktor stillsteht, kann die Kontrolleinheit unschwer durch Auswertung von an einem CAN-Bus anliegenden Geschwindigkeitsinformationen zugehöriger Raddrehzahlsensoren erkennen. Die jeweilige Position der Unterlenker wird beispielsweise mittels eines Stellwegsensors ermittelt und der Kontrolleinheit in Form entsprechender Positionsinformationen über den CAN-Bus mitgeteilt.

Des Weiteren besteht die Möglichkeit, dass von der Kontrolleinheit bei erkanntem Wartungsbedarf des Biegestabs über eine Nutzerschnittstelle die Ausgabe eines entsprechenden Wartungshinweises veranlasst wird. Dieser kann in Form einer Wartungsinformation auf einem Display der Nutzerschnittstelle ausgegeben oder aber im Rahmen einer Ferndiagnose über eine Drahtlosschnittstelle an einen Server übertragen werden, auf den ein Wartungsdienst Zugriff hat, der daraufhin Kontakt mit dem Betreiber des landwirtschaftlichen Traktors aufnimmt. Die Nutzerschnittstelle kann entweder als Graphical User Interface (GUI) mit einem berührungsempfindlichen Display fest im landwirtschaftlichen Traktor verbaut oder aber als mobiles Endgerät in Gestalt eines Smartphones oder dergleichen ausgebildet sein, wobei letzteres über eine Drahtlosschnittstelle mit der Kontrolleinheit in Datenaustauschverbindung steht.

Zusätzlich kann die Vorgabe des Grenzwerts mindestens zweistufig erfolgen, wobei die Ausgabe des Wartungshinweises von der Kontrolleinheit je nach überschrittener Stufe des vorgegebenen Grenzwerts angepasst wird. Dies erlaubt es, die Ausgabe des Wartungshinweises dahingehend zu differenzieren, ob ein Nachkalibrieren der Zugkraftmesseinrichtung ausreichend ist, um die erkannte Deformation des Biegestabs zu kompensieren (erste Stufe), oder ob dieser vollständig zu ersetzen ist (zweite Stufe).

Zur Erhöhung der Verlässlichkeit des Überprüfungsergebnisses besteht die Möglichkeit, dass die Kontrolleinheit ausschließlich dann auf eine (bleibende) überlastbedingte Deformation des Biegestabs schließt, wenn diese feststellt, dass der vorgegebene Grenzwert wiederholt, d.h. insbesondere mehrmals in Folge überschritten ist.

Das erfindungsgemäße Verfahren zur Ermittlung des Wartungszustands einer Zugkraftmesseinrichtung für einen landwirtschaftlichen Traktor wird im Folgenden anhand der beigefügten Zeichnungen näher erläutert. Es zeigt:
- Fig. 1: ein schematisch dargestelltes Ausführungsbeispiel des erfindungsgemäßen Verfahrens in Form eines Flussdiagramms, und
- Fig. 2: eine beispielhaft dargestellte Zugkraftmesseinrichtung zur Durchführung des erfindungsgemäßen Verfahrens als Bestandteil eines landwirtschaftlichen Traktors mit einem Dreipunkt-Kraftheber.

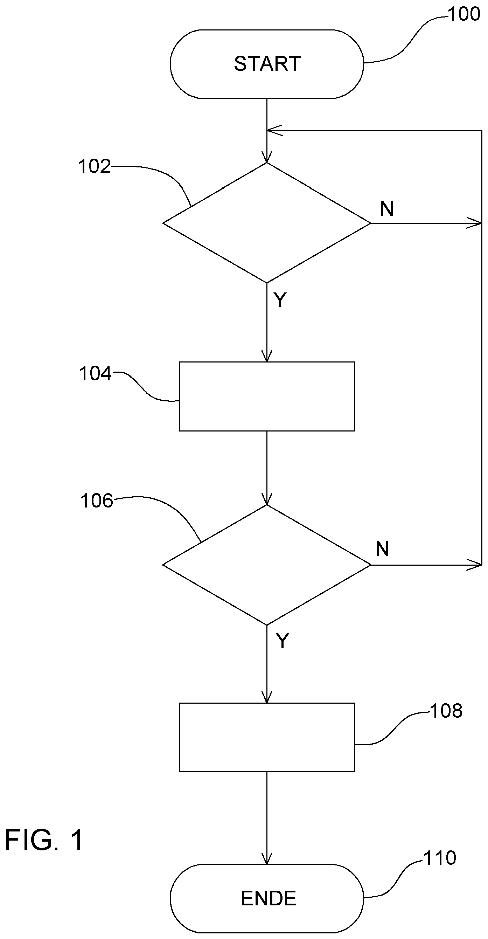

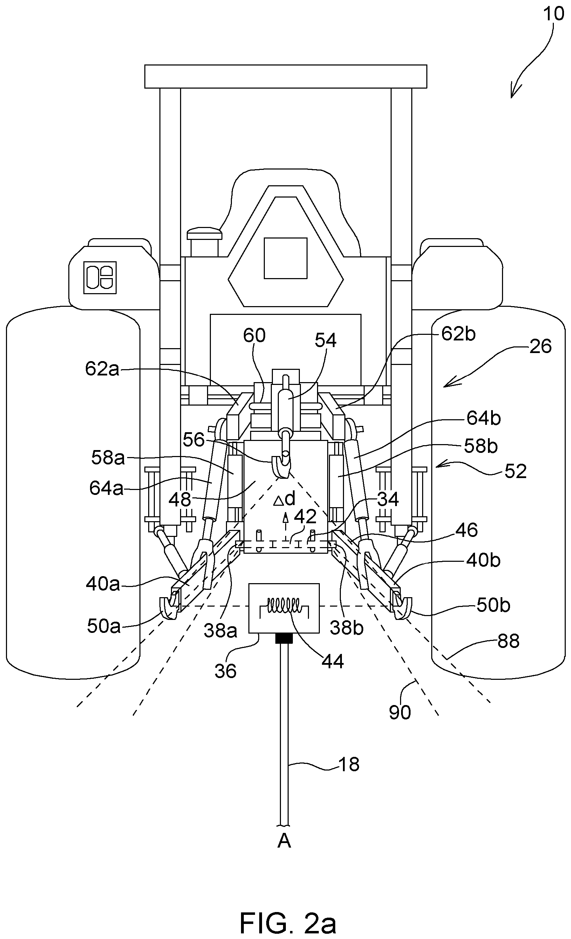

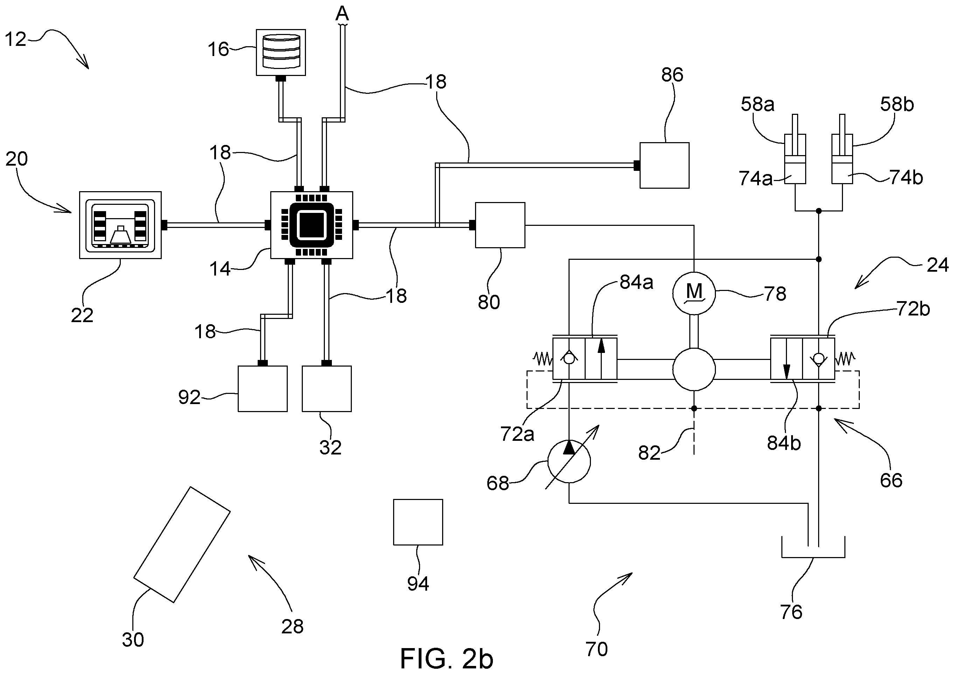

Fig. 1 zeigt ein schematisch dargestelltes Ausführungsbeispiel des erfindungsgemäßen Verfahrens in Form eines Flussdiagramms, wobei zunächst auf die zu dessen Durchführung vorgesehene Zugkraftmesseinrichtung gemäß Fig. 2 eingegangen werden soll.

Die in einem landwirtschaftlichen Traktor 10 untergebrachte Zugkraftmesseinrichtung 12 umfasst eine mikroprozessorgesteuerte Kontrolleinheit 14, eine zugehörige Speichereinheit 16, eine mit der Kontrolleinheit 14 über einen CAN-Bus 18 kommunizierende Nutzerschnittstelle 20 in Gestalt eines als Graphical User Interface (GUI) fest im landwirtschaftlichen Traktor 10 verbauten berührungsempfindlichen Displays 22 sowie eine Betätigungseinrichtung 24 zur elektrohydraulischen Steuerung eines Dreipunkt-Krafthebers 26. Optional ist eine weitere Nutzerschnittstelle 28 vorhanden, die durch ein mobiles Endgerät 30 in Gestalt eines Smartphones gebildet ist, das über eine Drahtlosschnittstelle 32 mit der Kontrolleinheit 14 in Datenaustauschverbindung steht.

Des Weiteren ist ein Biegestab 34 sowie eine Sensoranordnung 36 zur Erfassung einer an dem Biegestab 34 auftretenden Auslenkung Δd (deflection) vorhanden, die aufgrund einer an gegenüberliegenden Biegestabenden 38a, 38b ausgeübten Zug- oder Schubkraft linker und rechter Unterlenker 40a, 40b des Dreipunkt-Krafthebers 26 hervorgerufen wird. Der Biegestab 34 weist hierzu einen zentralen magnetisierten Bereich 42 auf, der zur Bereitstellung entsprechender Auslenkungsinformationen mittels eines von der Sensoranordnung 36 umfassten Hall-Sensors 44 hinsichtlich einer auslenkungsbedingt auftretenden Veränderung der Feldstärke erfasst wird.

Die solchermaßen erfasste Auslenkung Δd erlaubt es, ausgehend von den als bekannt vorausgesetzten mechanischen Eigenschaften des Biegestabs 34, die an den Unterlenkern 40a, 40b des Dreipunkt-Krafthebers 26 beim Betrieb eines bodeneigreifenden Anbaugeräts 46 auftretenden Zug- bzw. Schubkräfte zu ermitteln. Diese Informationen werden beispielsweise im Rahmen einer Zugkraftregelung beim Pflügen oder dergleichen verwendet.

Wie in Fig. 2 zu erkennen ist, ist der Biegestab 34 von einem durch ein Differentialgehäuse 48 gebildetes Chassisteil des landwirtschaftlichen Traktors 10 aufgenommen, wobei an den Biegestabenden 38a, 38b ein jeweiliger der beiden Unterlenker 40a, 40b verschwenkbar gelagert ist, sodass sich das an zugehörigen Kupplungsschnittstellen 50a, 50b der Unterlenker 40a, 40b angebrachte Anbaugerät 46 mittels eines hydraulischen Hubwerks 52 gezielt anheben und absenken lässt. Neben den beiden hydraulisch verstellbaren Unterlenkern 40a, 40b ist weiterhin ein zentraler Oberlenker 54 vorgesehen, der der Führung des Anbaugeräts 46 beim Heben und Senken dient und daran über eine weitere Kupplungsschnittstelle 56 eingehängt ist.

Das hydraulische Hubwerk 52 weist linke und rechte Hydraulikzylinder 58a, 58b auf, mittels derer sich über eine starre Welle 60 drehfest miteinander verbundene linke und rechte Hubarme 62a, 62b verschwenken lassen, an deren freien Enden wiederum die beiden Unterlenker 40a, 40b über jeweilige Hubstreben 64a, 64b angelenkt sind.

Die Betätigung der Hydraulikzylinder 58a, 58b erfolgt auf Veranlassung der als elektrisch steuerbare Ventilanordnung 66 ausgebildeten Betätigungseinrichtung 24. Diese weist ein aus einer Hochdruckpumpe 68 eines Hydrauliksystems 70 mit Hydraulikflüssigkeit gespeistes erstes Sitzventil 72a zur Druckbeaufschlagung zugehöriger Kolbenkammern 74a, 74b der Hydraulikzylinder 58a, 58b sowie ein zur Druckentlastung der Kolbenkammern 74a, 74b vorgesehenes zweites Sitzventil 72b auf, wobei das zweite Sitzventil 72b in ein Hydraulikreservoir 76 des Hydrauliksystems 70 mündet. Zur elektrischen Steuerung der Ventilanordnung 66 dient ein elektromotorischer Antrieb 78, der auf Veranlassung der Kontrolleinheit 14 über eine Motorsteuerung 80 als Bestandteil der Betätigungseinrichtung 24 ausgehend von einer in Fig. 2 wiedergegebenen mittigen Sperrstellung 82 entweder das erste oder das zweite Sitzventil 72a, 72b in dessen geöffnete Stellung 84a, 84b auszulenken vermag. Mit anderen Worten dient das erste Sitzventil 72a dem Anheben, das zweite Sitzventil 72b dem Absenken der Unterlenker 40a, 40b des Dreipunkt-Krafthebers 26. Mittels eines den Unterlenkern 40a, 40b zugeordneten Stellwegsensors 86 erfolgt über den CAN-Bus 18 durch Bereitstellung entsprechender Positionsinformationen eine Rückmeldung der von den Unterlenkern 40a, 40b ausgeführten Stellbewegung an die Kontrolleinheit 14, um diese kontrolliert zu regeln.

Unter Bezugnahme auf das in Fig. 1 wiedergegebene Flussdiagramm wird das von der Kontrolleinheit 14 durchgeführte und als entsprechender Programmcode in der Speichereinheit 16 abgelegte Verfahren bei Inbetriebnahme des landwirtschaftlichen Traktors 10 in einem Startschritt 100 initiiert.

In einem ersten Schritt 102 wird von der Kontrolleinheit 14 der aktuelle Bewegungszustand des landwirtschaftlichen Traktors 10 durch Auswertung von am CAN-Bus 18 anliegenden Geschwindigkeitsinformationen zugehöriger Raddrehzahlsensoren 92 (siehe Fig. 2) ermittelt. Erkennt die Kontrolleinheit 14, dass der landwirtschaftliche Traktor 10 stillsteht, so wird ferner auf Grundlage der seitens des Stellwegsensors 86 bereitgestellten Positionsinformationen überprüft, ob sich die Unterlenker 40a, 40b zugleich (i) in einer abgesenkten Arbeitsposition 88 und/oder (ii) in einer zum Anbringen bzw. Abnehmen des Anbaugeräts 46 (weiter) abgesenkten Kuppelposition 90 befinden. In beiden Fällen ist mit hinreichender Wahrscheinlichkeit davon auszugehen, dass die Unterlenker 40a, 40b im Wesentlichen frei von Zug- oder Schubkräften sind, da das bodeneigreifende Anbaugerät 46 dann auf dem Untergrund ruhend aufliegt. Bei Erkennung eines derartigen zug- oder schubkraftfreien Betriebszustands des Dreipunkt-Krafthebers 26 wird mit einem zweiten Schritt 104 fortgefahren. Andernfalls kehrt das Verfahren zum ersten Schritt 102 zurück, um erneut durchlaufen zu werden.

Im zweiten Schritt 104 ermittelt die Kontrolleinheit 14 auf Grundlage der von der Sensoranordnung 36 bereitgestellten Biegungsinformationen, ob eine messbare Auslenkung Δd des Biegestabs 34 vorliegt. Ist dies der Fall, so wird deren Betrag in einem dritten Schritt 106 mit einem vorgegebenen Grenzwert Δd_max verglichen. Der Grenzwert Δd_max wird derart gesetzt, dass dieser charakteristisch ist für eine überlastbedingte (bleibende) Deformation des jeweils verwendeten Biegestabs 34, abhängig von dessen als bekannt vorausgesetzten mechanischen Eigenschaften. Somit kann von der Kontrolleinheit 14 bei betraglichem Überschreiten des vorgegebenen Grenzwerts Δd_max auf einen entsprechenden Wartungsbedarf des Biegestabs 34 geschlossen werden, woraufhin mit einem vierten Schritt 108 fortgefahren wird. Andernfalls kehrt das Verfahren auch hier zum ersten Schritt 102 zurück, um erneut durchlaufen zu werden.

Im vierten Schritt 108 wird von der Kontrolleinheit 14 über die Nutzerschnittstelle 20, 28 die Ausgabe eines entsprechenden Wartungshinweises veranlasst. Dieser wird in Form einer Wartungsinformation auf dem Display 22 der Nutzerschnittstelle 20 bzw. dem durch das mobile Endgerät 30 gebildeten weiteren Nutzerschnittstelle 28 ausgegeben oder aber im Rahmen einer Ferndiagnose über die Drahtlosschnittstelle 32 an einen Server 94 übertragen, auf den ein Wartungsdienst Zugriff hat, der daraufhin Kontakt mit dem Betreiber des landwirtschaftlichen Traktors 10 aufnimmt (Siehe Fig. 2).

Optional erfolgt die Vorgabe des Grenzwerts Δd_max mindestens zweistufig, wobei die Ausgabe des Wartungshinweises im vierten Schritt 108 von der Kontrolleinheit 14 je nach überschrittener Stufe des vorgegebenen Grenzwerts Δd_max angepasst wird. Dies dient dem Zweck, die Ausgabe des Wartungshinweises dahingehend zu differenzieren, ob ein Nachkalibrieren der Zugkraftmesseinrichtung 12 ausreichend ist, um die erkannte Deformation des Biegestabs 34 zu kompensieren (erste Stufe Δd_max_1), oder ob dieser vollständig zu ersetzen ist (zweite Stufe Δd_max_2 > Δd_max_2).

Zur Erhöhung der Verlässlichkeit des Überprüfungsergebnisses ist ferner vorgesehen, dass die Kontrolleinheit 14 im dritten Schritt 106 ausschließlich dann auf eine (bleibende) überlastbedingte Deformation des Biegestabs 34 schließt, wenn diese feststellt, dass der vorgegebene Grenzwert Δd_max wiederholt, d.h. mehrmals in Folge überschritten ist. Dies ist zum Beispiel nach einer zehnmaligen Wiederholung der Fall.

Auf den vierten Schritt 108 folgt ein Schlussschritt 110, in dem das Verfahren beendet wird.

## Patentansprüche

1. Verfahren zur Ermittlung des Wartungszustands einer Zugkraftmesseinrichtung für einen landwirtschaftlichen Traktor, bei dem die Zugkraftmesseinrichtung (12) einen Biegestab (34) sowie eine Sensoranordnung (36) zur Erfassung einer an dem Biegestab (34) auftretenden Auslenkung umfasst, wobei die Auslenkung aufgrund einer an gegenüberliegenden Biegestabenden (38a, 38b) ausgeübten Zug- oder Schubkraft linker und rechter Unterlenker (40a, 40b) eines Dreipunkt-Krafthebers (26) hervorgerufen wird, **dadurch gekennzeichnet, dass** von einer Kontrolleinheit (14) bei Erkennung eines zug- oder schubkraftfreien Betriebszustands des Dreipunkt-Krafthebers (26) die mittels der Sensoranordnung (36) erfasste Auslenkung des Biegestabs (34) mit einem vorgegebenen Grenzwert verglichen wird, um bei betraglichem Überschreiten des vorgegebenen Grenzwerts auf einen Wartungsbedarf des Biegestabs (34) zu schließen.

2. Verfahren nach Anspruch 1, **dadurch gekennzeichnet, dass** von der Kontrolleinheit (14) auf einen zug- oder schubkraftfreien Betriebszustand des Dreipunkt-Krafthebers (26) geschlossen wird, wenn sich die Unterlenker (40a, 40b) bei stillstehendem landwirtschaftlichem Traktor (10) in einer abgesenkten Arbeitsposition (88) befinden.

3. Verfahren nach Anspruch 1 oder 2, **dadurch gekennzeichnet, dass** von der Kontrolleinheit (14) auf einen zug- oder schubkraftfreien Betriebszustand des Dreipunkt-Krafthebers (26) geschlossen wird, wenn sich die Unterlenker (40a, 40b) bei stillstehendem landwirtschaftlichem Traktor (10) in einer zum Anbringen bzw. Abnehmen eines Anbaugeräts (46) abgesenkten Kuppelposition (90) befinden.

4. Verfahren nach wenigstens einem der vorhergehenden Ansprüche, **dadurch gekennzeichnet, dass** von der Kontrolleinheit (14) bei erkanntem Wartungsbedarf des Biegestabs (34) über eine Nutzerschnittstelle (20, 28) die Ausgabe eines Wartungshinweises veranlasst wird.

5. Verfahren nach Anspruch 4, **dadurch gekennzeichnet, dass** die Vorgabe des Grenzwerts mindestens zweistufig erfolgt, wobei die Ausgabe des Wartungshinweises von der Kontrolleinheit (14) je nach überschrittener Stufe des vorgegebenen Grenzwerts angepasst wird.

6. Verfahren nach wenigstens einem der vorhergehenden Ansprüche, **dadurch gekennzeichnet, dass** die Kontrolleinheit (14) ausschließlich dann auf eine überlastbedingte Deformation des Biegestabs (34) schließt, wenn diese feststellt, dass der vorgegebene Grenzwert wiederholt überschritten ist.
